# EUROPEAN PATENT SPECIFICATION

(11) **EP 2 664 439 B1**
(45) Date of publication and mention of the grant of the patent: **22.08.2018**
(21) Application number: 13166787.5
(22) Date of filing: 07.05.2013
(51) Int. Cl.: B29C 45/76

(54) **INJECTION MOLDING MACHINE AND POWER REGENERATING DEVICE**
SPRITZGIESSMASCHINE UND STROMREGENERIERUNGSVORRICHTUNG
MACHINE DE MOULAGE PAR INJECTION ET DISPOSITIF DE RÉGÉNÉRATION D'ÉNERGIE

(30) Priority: 18.05.2012 JP 2012115062
(43) Date of publication of application: 20.11.2013
(73) Proprietor: SUMITOMO HEAVY INDUSTRIES, LTD., Tokyo 141-6025 (JP)
(72) Inventor: Okada, Noritaka, Kanagawa, 237-8555 (JP)
(74) Representative: Hoffmann Eitle

(56) References cited:
- JP-A- 2004 249 534
- US-A1- 2010 102 770
- US-B1- 6 333 611

## Description

### BACKGROUND OF THE INVENTION

### 1. Field of the Invention

The present invention relates to an injection molding machine and a power regenerating device having a regenerating part that regenerates electric power for a power source.

### 2. Description of the Related Art

For example, Japanese Laid-Open Patent Publication No. 2004-154961 discloses technology related to an injection molding machine having a regenerating part that regenerates electric power for a power source.

In the related art, it has been difficult to operate a load that is arranged between a power source and a power regenerating part when power failure of the power source occurs.

US 6 333 611 B1 discloses a motor drive apparatus in which AC power is converted to DC power which is supplied to a drive circuit for driving a motor. The AC power from the AC power source is also supplied to an AC load. Regenerative energy from the motor can be stored in an accumulating part and can be re-used for providing additional DC power to the drive circuit.

Similar circuits are disclosed in JP 2004 249534 A and US 2010/102770 A1, i.e. accumulating parts are used for storing regenerative energy generated by a motor to be re-used either for also driving the motor or for supplying regenerative energy to a DC load.

The object of the present invention is to provide an injection molding machine which allows to efficiently drive a load arranged between a power source and a power regenerating part when power failure of the power source occurs.

This object is solved by claim 1.

### SUMMARY OF THE INVENTION

According to one embodiment of the present invention, an injection molding machine is provided that includes a power regenerating part that regenerates electric power to a power source and a load that is connected between the power source and the power regenerating part. The power regenerating part supplies operating electric power for operating the load when power failure of the power source occurs.

According to another embodiment of the present invention, an injection molding machine is provided that includes a power regenerating part that regenerates electric power to a power source, a load that is connected between the power source and the power regenerating part, and an electric power accumulating part that accumulates operating electric power for operating the load via the power regenerating part.

According to another embodiment of the present invention, a power regenerating device is provided that includes a regenerating part that regenerates electric power to a power source. The regenerating part supplies operating electric power for operating a load connected between the power source and the regenerating part when power failure of the power source occurs.

According to another embodiment of the present invention, a power regenerating device is provided that includes a regenerating part that regenerates electric power to a power source, and an electric power accumulating part that accumulates operating electric power for operating a load connected between the power source and the regenerating part via the regenerating part.

### BRIEF DESCRIPTION OF THE DRAWINGS

FIG. 1 is a circuit diagram schematically illustrating a configuration of an injection molding machine according to an embodiment of the present invention; and
FIG. 2 is a circuit diagram illustrating plural loads according to an embodiment of the present invention.

### DETAILED DESCRIPTION OF THE PREFERRED EMBODIMENT

According to an aspect of the present invention, an injection molding machine and a power regenerating device are configured to enable a load connected between a power source and a power regenerating part to operate even when power failure of the power source occurs.

In the following, exemplary embodiments of the present invention are described with reference to the accompanying drawings.

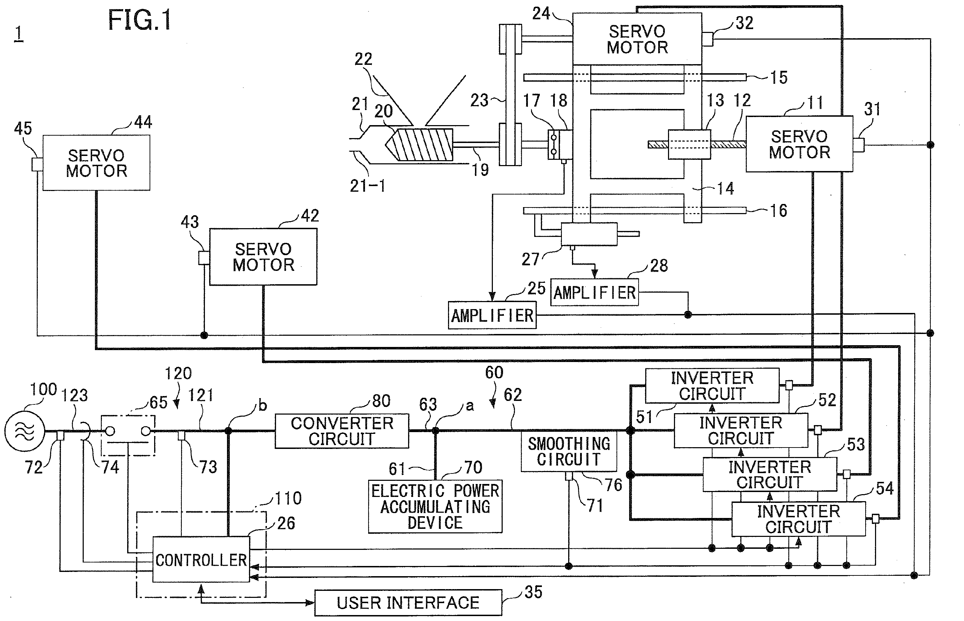

FIG. 1 is a circuit diagram schematically illustrating a configuration of an injection molding machine 1 according to an embodiment of the present invention.

The injection molding machine 1 of the present embodiment is an electric injection molding machine that includes a servo motor 11 for injection. The rotation of the servo motor 11 for injection is transmitted to a ball screw 12. A nut 13 that moves back and forth with the rotation of the ball screw 12 is fixed to a pressure plate 14. The pressure plate 14 is arranged to be movable along guide bars 15 and 16 that are fixed to a base frame (not shown). The back and forth movement of the pressure plate 14 is transmitted to a screw 20 via a bearing 17, a load cell 18, and an injection shaft 19. The screw 20 is arranged within a heating cylinder 21 to be rotatable and movable along its axial directions. A hopper 22 for supplying resin is arranged at the heating cylinder 21 toward the rear side of the screw 20. A rotational movement of a servo motor 24 for rotating the screw 20 is transmitted to the injection shaft 19 via a link member 23 such as a belt or a pulley. That is, the injection shaft 19 is driven to rotate by the servo motor 24 for rotating the screw 20, and this in turn causes the screw 20 to rotate.

In a plasticizing process, the screw 20 within the heating cylinder 21 rotates and moves backward so that molten resin may be accumulated at the front side of the screw 20; namely, at a nozzle 21-1 side of the heating cylinder 21. In an injection process, the molten resin accumulated at the front side of the screw 20 is pressurized and filled into a mold to perform injection molding. During this process, the pressing force applied to the resin is detected by the load cell 18 as a reaction force. That is, the resin pressure at the front side of the screw 20 is detected by the load cell 18. The detected pressure is amplified by a load cell amplifier 25 and input to a controller 26 that acts as a control unit. In a holding pressure process, a predetermined holding pressure is maintained on the resin within the mold.

A position detector for detecting the moving distance of the screw 20 is attached to the pressure plate 14. A detection signal of the position detector 27 is amplified by an amplifier 28 and input to the controller 26. This detection signal may also be used to detect the moving speed of the screw 20.

Encoders 31 and 32 for detecting the servo motor rotation speed are attached to the servo motors 11 and 24, respectively. The rotations speeds detected by the encoders 31 and 32 are input to the controller 26.

The injection molding machine 1 also includes a servo motor 42 for opening and closing the mold and a servo motor 44 for ejecting a molding product. The servo motor 42 may be configured to drive a mold clamping device to open/close a movable platen, for example. By opening/closing the moveable platen, a mold closing process for closing the mold, a mold opening process for opening the mold, and a mold clamping process for clamping the mold may be performed. The servo motor 44 may be configured to move an ejector rod (not shown) via a ball screw mechanism. By moving the ejector rod, a molding product ejection process for pushing a molding product out of the mold may be performed. Encoders 43 and 45 for detecting the servo motor rotation speed are attached to the servo motors 42 and 44, respectively. The rotation speeds detected by the encoders 43 and 45 are input to the controller 26.

The controller 26 includes a microcomputer as a main component. The controller 26 may include a CPU, a ROM that stores control programs, a readable/writable RAM that stores data such arithmetic operation results, a timer, a counter, an input interface, and an output interface, for example.

During molding processes in which the injection molding machine 1 performs various molding operations, the controller 26 sends an electric current (torque) command to one or more inverter circuits (motor driving circuits) 51-54 according to the process being performed. The inverter circuits 51-54 are drive parts that respectively drive the servo motors 11, 24, 42, and 44 used in the various molding processes for enabling the molding operations of the injection molding machine 1. For example, the controller 26 controls the rotation speed of the servo motor 24 using the inverter circuit 52 to perform the plasticizing process. Also, the controller 26 controls the rotation speed of the servo motor 11 using the inverter circuit 51 to perform the injection process and the pressure holding process. Similarly, the controller 26 controls the rotation speed of the servo motor 42 using the inverter circuit 53 to perform the mold closing process and the mold opening process. The controller 26 controls the rotation speed of the servo motor 44 using the inverter circuit 54 to perform the molding product ejection process.

The user interface 35 includes an input setting part that enables a user to establish molding conditions for the various molding processes such as the mold opening/closing processes and the injection process. The user interface 35 also includes an input part for inputting various commands from the user and an output part (e.g., display) that outputs various items of information to the user.

One cycle of molding processes of the injection molding machine 1 typically includes a mold closing process for closing the mold, a clamping process for clamping the mold, a nozzle touch process for pushing the nozzle 21-1 against a sprue (not shown) of the mold, an injection process for moving the screw 20 forward within the heating cylinder 21 and injecting the molten material accumulated at the front side of the screw 20 into a mold cavity (not shown), a holding pressure process for applying a holding pressure on the resin for some time after injection to avoid the generation of sinks and voids, a plasticizing process for accumulating molten material for a next cycle by rotating the screw 20 to cause gradual melting of resin being transferred to the front side of the heating cylinder 21 while the molten material within the mold cavity is being cooled and solidified, a mold opening process for opening the mold in order to remove the solidified molding product from the mold, and a molding product ejection process for pushing out the molding product with an ejection pin (not shown) that is arranged at the mold.

The injection molding machine 1 is configured to supply electric power to the servo motors 11, 24, 42, and 44 via a converter circuit 80 and the inverter circuits 51-54 based on an alternating-current electric power supplied from a power source 100. Also, the injection molding machine 1 is configured to feed regenerative electric power generated by the servo motors 11, 24, 42, and 44 back to the power source 100 via the converter circuit 80 and the inverter circuits 51-54. In this way, energy conservation may be realized at the injection molding machine 1.

The power source 100 may be an external alternating-current electric power source that is provided at a factory facility, for example. The power source 100 may be a commercial power source that outputs a sine wave alternating-current electric power of a predetermined voltage (e.g., 200 V or 400 V) at a predetermined frequency (e.g., 50 Hz or 60 Hz).

The inverter circuits 51-54 are drive parts that are configured to convert direct-current electric power supplied from the converter circuit 80 via a DC link 60 into alternating-current electric power and drive the servo motors 11, 24, 42, and 44 based on the converted alternating-current electric power. For example, the inverter circuits 51-54 may convert the direct-current electric power supplied from the converter circuit 80 via the DC link 60 into three-phase electric power.

The inverter circuits 51-54 are also configured to convert alternating-current regenerative electric power generated by the servo motors 11, 24, 42, and 44 into direct-current regenerative electric power and supply the converted direct-current regenerative electric power to an electric power accumulating device 70 of the DC link 60 and the converter circuit 80. For example, the inverter circuits 51-54 may convert three-phase electric power supplied from the servo motors 11, 24, 42, and 44 into direct-current electric power.

The inverter circuits 51-54 are connected in parallel to a direct-current power supply line 62 of the DC link 60. In the case where the inverter circuits 51-54 are configured to convert direct-current electric power to and from three-phase electric power, the inverter circuits 51-54 may preferably include three-phase bridge circuits that have six power transistors, for example.

The DC link 60 corresponds to a direct-current power supply path part arranged between a direct-current output side of the converter circuit 80 and a direct-current input side of the inverter circuits 51-54. The DC link 60 includes direct-current power supply lines 61-63, a smoothing circuit 76, and the electric power accumulating device 70.

The direct-current power supply lines 61-63 correspond to transmission paths for a direct current flowing in between the converter circuit 80, the inverter circuits 51-54, and the electric power accumulating device 70. For example, each of the direct-current power supply lines 61-63 may include a pair of power supply lines, one corresponding to an electric power transmission line and the other corresponding to a reference line such as a ground line.

The smoothing circuit 76 is configured to smooth or even out the direct-current voltages of the direct-current power supply lines 61-63. For example, the smoothing circuit 76 may include a electrolytic capacitor as a voltage smoothing capacitor. A DC link voltage Vdc of the direct-current power supply lines 61-63 of the DC link 60 may correspond to the voltage between both ends of the voltage smoothing capacitor of the smoothing circuit 76, for example. The detected value of the DC link voltage Vdc is input to the controller 26.

The electric power accumulating device 70 is an electric power accumulator that is capable of accumulating sufficient electric power for enabling normal rotational operations of the servo motors 11, 24, 42, and 44. The electric power accumulating capacity of the electric power accumulating device 70 is arranged to be substantially greater than the electric power accumulating capacity of the smoothing circuit 76. That is, the electric power accumulated in the smoothing circuit 76 cannot sustain normal rotational operations of the servo motors 11, 24, 42, and 44 for as long a time period as the electric power accumulated in the electric power accumulating device 70. The electric power accumulating device 70 may include a battery and an electric double layer capacitor, for example. By using an electric double layer capacitor, sufficient capacity for charging regenerative electric power may be secured while preventing enlargement of the electric power accumulating device 70.

The injection molding machine 1 has a function for charging the electric power accumulating device 70 with regenerative energy generated by the servo motors 11, 24, 42, and 44 via the inverter circuits 51-54 and the DC link 60. The injection molding machine 1 also has a function for supplying discharged energy from the electric power accumulating device 70 to the servo motors 11, 24, 42, and 44 via the DC link 60 and the inverter circuits 51-54. Further, the injection molding machine 1 has a function for supplying discharged energy from the electric power accumulating device 70 to a load 110 via the converter circuit 80. By configuring the injection molding machine 1 to have such functions, the amount of power to be supplied from the power source 100 may be reduced so that power conservation of the injection molding machine 1 may be realized.

The converter circuit 80 is a power regenerating converter (power regenerating device) that is arranged between an alternating-current power supply path part 120, which is connected to the power source 100, and the DC link 60, which is connected to the inverter circuits 51-54. The converter circuit 80 is configured to convert alternating-current electric power supplied from the power source 100 via the alternating-current power supply path part 120 into direct-current electric power and supply the converted direct-current electric power to the electric power accumulating device 70 of the DC link 60 and the inverter circuits 51-54. The converter circuit 80 is also configured to convert direct-current electric power supplied from the inverter circuits 51-54 and the electric power accumulating device 70 of the DC link 60 into alternating-current electric power and supply the converted alternating-current electric power to the power source 100 and the load 110 via the alternating-current power supply path part 120. That is, the converter circuit 80 is configured to supply a sufficiently large amount of electric power to the load 110 for enabling normal operations of the load 110 based on the direct-current electric power from the electric power accumulating device 70 and/or the inverter circuits 51-54.

The converter circuit 80 may include a three-phase bridge circuit with six power transistors (power running and regenerating part) that is configured to convert alternating-current electric power to direct-current electric power and vice versa during power running and regenerating operations of a motor, for example. During power running operations of the motor, the converter circuit 80 may rectify an alternating-current flowing in the alternating-current power supply path part 120 into a direct-current using diodes that are connected in parallel to the power transistors of the three-phase bridge circuit.

The converter circuit 80 may also have a power running path and a regenerating path arranged in parallel, for example. In this case, a diode bridge circuit configured to convert alternating-current electric power supplied from the alternating-current power supply path part 120 into direct-current electric power may be inserted at the power running path, and a bridge circuit configured to convert direct-current electric power supplied from the DC link 60 into alternating-current electric power may be inserted at the regenerating path, for example.

The alternating-current power supply path part 120 is a power supply line part that connects the power source 100 to the converter circuit 80 so that alternating-current electric power may be transmitted between the power source 100 and the converter circuit 80. The alternating-current power supply path part 120 includes alternating-current power supply lines 121 and 123. For example, each of the alternating-current power supply lines 121 and 123 may have current paths of three phases R, S, and T.

The converter circuit 80 converts direct-current electric power from the electric power accumulating device 70 and/or the inverter circuits 51-54 into alternating-current electric power in order to supply alternating-current operating electric power to the load 110 for operating the load 110 when the power source 100 fails. By supplying such operating electric power to the load 110 when the power source 100 fails, normal operations of the load 110 may be continued even when power supply from the power source 100 is interrupted.

The controller 26 is preferably configured to cut off the alternating-current power supply path part 120 by means of a switch 65 so that regenerative electric power from the converter circuit 80 may not be supplied to the power source 100 when power failure of the power source 100 is detected. The switch 65 is a cutoff part that cuts off the alternating-current power supply path part 120 when power failure of the power source 100 is detected while the load 110 is operating. By cutting off the alternating-current power supply path part 120 by means of the switch 65, the electric power from the converter circuit 80 may be prevented from being supplied to the power source 100 so that operating electric power for operating the load 110 via the converter circuit 80 may be efficiently supplied to the load 110.

The load 110 includes at least the controller 26 and is preferably connected to the alternating-current power supply path part 120 at the converter circuit 80 side of the switch 65. The switch 65 is configured to cut off the alternating-current power supply path part 120 arranged between the power source 100 and the load 110.

The switch 65 is a member that enables selective switching between cutoff and continuity of the alternating-current power supply path part 120. When the switch 65 is turned off, the alternating-current power supply path part 120 may be cut off so that electric power transmission between the power source 100 and the converter circuit 80 may be discontinued. For example, the switch 65 may be a thyristor, a contactor, a semiconductor switching device such as a transistor, or a relay.

The controller 26 may be configured to determine when an effective voltage or peak voltage of the alternating-current power supply path part 120 falls below a predetermined value and detect such a condition as power failure of the power source 100, for example. The controller 26 may detect power failure of the power source 100 using a voltage detecting part 72 that detects the voltage of the alternating-current power supply line 123 at the power source 100 side of the switch 65, or detect power failure of the power source 100 using a voltage detecting part 73 that detects the voltage of the alternating-current power supply line 121 at the converter circuit 80 side of the switch 65.

The controller 26 may also be configured to detect the alternating-current flowing in the alternating-current power supply path part 120 using a current detecting part 74. When power failure of the power source 100 is detected, the controller 26 may control the converter circuit 80 so that the alternating-current effective value detected by the current detecting part 74 may be substantially zero before turning off the switch 65. In this way, the effective current flowing in the switch 65 may be adjusted to be substantially zero so that the alternating-current power supply path part 120 may be cut off even when a thyristor is used as the switch 65.

Also, while the alternating-current power supply path part 120 is cut off by the switch 65, the controller 26 may detect recovery of the power source 100 from power failure based on the voltage detected by the voltage detecting part 72. For example, the controller 26 may determine when the effective voltage or peak voltage of the alternating-current power supply line 123 of the alternating-current power supply path part 120 detected by the voltage detecting part 72 is at least a predetermined value and detect such a condition as recovery of the power source 100 from power failure. Upon detecting recovery of the power source 100 from power failure, the controller 26 may control operations of the converter circuit 80 so that the phase of the voltage detected by the voltage detecting part 72 matches the phase of the voltage detected by the voltage detecting part 73 before turning on the switch 65. In this way, phase shift of the alternating-current power supply path part 120 may be prevented.

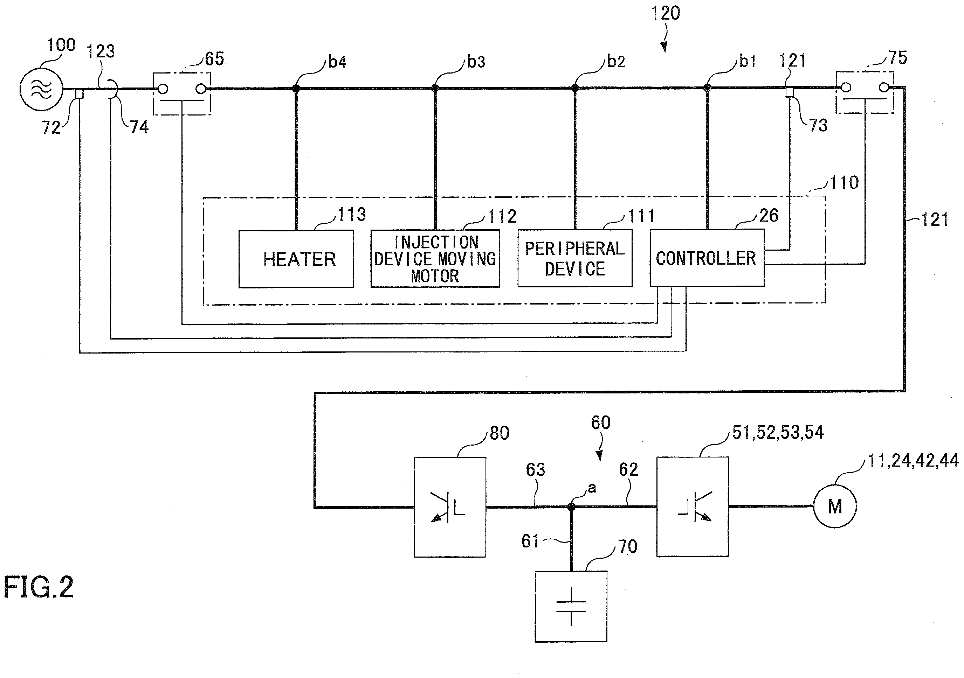

FIG. 2 is a circuit diagram illustrating an exemplary configuration of the load 110. In the illustrated example, the load 110 includes the controller 26, a peripheral device 111, an injection device moving motor 112, and a heater 113. The peripheral device 111 may be a removing device, a resin supplying device, or a hoop conveying device, for example. The injection device moving motor 112 is a motor that does not require an inverter as a drive circuit. The heater 113 is a heating device for raising the temperature of the heating cylinder 21 accommodating the screw 20 to a predetermined value.

Also, a switch 75 is inserted at the alternating-current power supply line 121 of the alternating-current power supply path part 120 to enable selective switching between cutoff and continuity of the alternating-current power supply line 121. By turning off the switch 75, the alternating-current power supply line 121 may be cut off so that electric power transmission between the power source 100 and the converter circuit 80 and electric power transmission between the load 110 and the converter circuit 80 may be discontinued. For example, the switch 75 may be a thyristor, a contactor, a semiconductor switching device such as a transistor, or a relay.

The controller 26 may turn on/off the switch 75 after a predetermined time elapses from the time the controller 26 switches on/off the switch 65 (e.g., after startup of the controller 26 is completed). By having the switch 75 turned off, even when the switch 65 is turned on, electric power supplied from the power source 100 may be prevented from being supplied to the converter circuit 80. In this way, abnormal control operations of the converter circuit 80 may be prevented.

While certain preferred embodiments of the present invention have been described above, the present invention is not limited to these embodiments, and numerous variations and modifications may be made without departing from the scope of the present invention.

For example, a cutoff part for cutting off power supply from the converter circuit 80 to the power source 100 may include one or more of the switch 65 for cutting off the alternating-current power supply path part 120 arranged between the plural loads shown in FIG. 2 to enable selection of the load that is to receive power supply from the converter circuit 80 upon power failure of the power source 100.

For example, in a case where a first load is connected to the alternating-current power supply line 121 at a first connection point, and a second load is connected to the alternating-current power supply line 121 at a second connection point that is positioned toward the power source 100 side of the first connection point, a switch for cutting off the alternating-current power supply line 121 may be arranged between the first connection point and the second connection point. In this way, the first load may be selected as the load that receives power supply from the converter 80 when power failure of the power source 100 occurs, and the second load may be arranged to receive no power supply from the converter circuit 80 when power failure of the power source 100 occurs.

Specifically, for example, by inserting a switch for cutting off the alternating-current power supply line 121 between connection points b1 and b2 in FIG. 2, only the controller 26 may be arranged to receive power supply from the converter circuit 80 when power failure of the power source 100 occurs. In another example, a switch for cutting off the alternating-current power supply line 121 may be inserted between connection points b1 and b2 and between connection points b2 and b3. In this way, the controller 26 and the peripheral device 111 may be arranged to receive power supply from the converter circuit 80 when power failure of the power source 100 occurs.

In another exemplary arrangement of the switch 65 inserted between the plural loads, a switch for cutting off the alternating-current power supply line 121 may be inserted in between all of the loads and between the load and the power source. In this way, the switches may be selectively turned off starting with the load closest to the converter circuit 80 so that up to a selected load may be arranged to receive power supply from the converter circuit 80 when power failure of the power source 100 occurs.

In another exemplary arrangement of the switch 65 inserted between the plural loads, a switch for cutting off an alternative-current power supply line arranged between a connection point of a load connected to the alternating-current power supply line 121 and this load may be arranged at this alternative-current power supply line (in this case, a switch for cutting off an alternative-current power supply line between the power source 100 and connection point b4 is required as well). In this way, a load that is to receive the supply of electric power from the power source 100 or electric power output from the converter circuit 80 when the power source 100 fails may be selectively arranged. For example, in the case where such a switch is inserted between the heater 113 and connection point b4, a selection may be made as to whether electric power from the power source 100 or electric power output from the converter circuit 80 upon power failure of the power source 100 is to be supplied to the heater 113. In a case where the switch is inserted between the peripheral device 111 and connection point b2, a selection may be made as to whether electric power from the power source 100 or electric power output from the converter circuit 80 upon power failure of the power source 100 is to be supplied to the peripheral device 111.

## Claims

1. An injection molding machine (1), comprising:
a) a power regenerating part (80) that regenerates electric power to an AC power source (100); and
b) an AC load (110, 26) that is connected between the AC power source (100) and the power regenerating part (80); and
c) a controller (26) which is adapted to detect a power failure of the AC power source (100); wherein
d) the power regenerating part (80) which is adapted to supply operating electric power for operating the AC load (110, 26) when power failure of the AC power source (100) occurs and when said controller (26) detects said power failure of the AC power source (100).

2. The injection molding machine as claimed in claim 1, further comprising:
an electric power accumulating part (70) that accumulates the operating electric power.

3. The injection molding machine as claimed in any one of claims 1 to 2, further comprising:
a motor (11, 32, 42, 44); and
a drive part (51-54) for driving the motor; wherein
the operating electric power includes
regenerative power that is regenerated from the motor via the drive part.

4. The injection molding machine as claimed in any one of claims 1 to 3, further comprising:
a cutoff part (65) that cuts off a supply of the operating electric power to the power source (100).

5. The injection molding machine as claimed in claim 4, wherein
the cutoff part (65) is configured to cut off a power supply path (120) between the power source (100) and the load (110).

6. The injection molding machine as claimed in claim 4 or 5, further comprising:
at least two of the loads (111-113); wherein
the cutoff part (65) is configured to cut off a power supply path between the loads (111-113).

7. The injection molding machine as claimed in any one of claims 1 to 6, wherein the AC load includes a control unit that controls molding operations.

8. The injection molding machine as claimed in claims 1 to 7, wherein
said AC power source (100) is adapted to supply AC electric power;
said regenerating part (80) has an input and an output, said input being connected to said AC power source (100);
said AC load (110, 26) is connected to the power source (100) and the power regenerating part (80);
said AC load (110, 26) includes said controller (26); and further comprising
an electric power accumulating part (70) that accumulates operating electric DC power for operating the AC load (110, 26) via the power regenerating part (80) and which is connected to the output of the power regenerating part (80);
drive circuits (51-54) having inputs connected to said output of said power regenerating part (80);
servo motors (11, 32, 42, 44) connected to outputs of the drive circuits (51-54);
said power regenerating part (80) converting AC power from the input into DC power at the output and converting DC power from the output into AC power at the input; and
wherein said electric power accumulating part (70) is adapted to be charged with regenerative DC energy generated by the servo motors (11, 24, 42, 44) via the drive circuits (51-54), to supply discharged energy to the servo motors (51-54) via the drive circuits (51-54), and to supply discharged energy to the AC load (110, 26) via said power regenerating part (80); and
wherein the power regenerating part (80) supplies from said electric power accumulating part (70) said operating electric power for operating the load (110) when said controller (26) detects said power failure of the AC power source (100).

## Patentansprüche

1. Spritzgussmaschine (1), umfassend:
a) einen Stromregenerierungsteil (80), der elektrischen Strom an einer Wechselstromquelle (100) regeneriert; und
b) eine Wechselstromladung (110, 26), die zwischen der Wechselstromquelle (100) und dem Stromregenerierungsteil (80) verbunden ist; und
c) eine Steuerung (26), die derart angepasst ist, einen Stromausfall der Wechselstromquelle (100) zu erkennen; wobei
d) der Stromregenerierungsteil (80), der derart angepasst ist, elektrischen Betriebsstrom zum Betrieb der Wechselstromladung (110, 26) zu liefern, wenn ein Stromausfall der Wechselstromquelle (100) stattfindet und wenn die Steuerung (26) den Stromausfall der Wechselstromquelle (100) erkennt.

2. Spritzgussmaschine nach Anspruch 1, weiter umfassend:
einen elektrischen Stromspeicherungsteil (70), der den elektrischen Betriebsstrom speichert.

3. Spritzgussmaschine nach einem der Ansprüche 1 bis 2, weiter umfassend:
einen Motor (11, 32, 42, 44); und
einen Antriebsteil (51-54) zum Antreiben des Motors; wobei
der elektrische Betriebsstrom einen regenerativen Strom beinhaltet, der von dem Motor über den Antriebsteil regeneriert wird.

4. Spritzgussmaschine nach einem der Ansprüche 1 bis 3, weiter umfassend:
einen Unterbrechungsteil (65), der eine Lieferung des elektrischen Betriebsstroms an die Stromquelle (100) unterbricht.

5. Spritzgussmaschine nach Anspruch 4, wobei
der Unterbrechungsteil (65) derart konfiguriert ist, einen Stromlieferweg (120) zwischen der Stromquelle (100) und der Ladung (110) zu unterbrechen.

6. Spritzgussmaschine nach Anspruch 4 oder 5, weiter umfassend:
wenigstens zwei der Ladungen (111-113); wobei
der Unterbrechungsteil (65) derart konfiguriert ist, einen Stromlieferweg zwischen den Ladungen (111-113) zu unterbrechen.

7. Spritzgussmaschine nach einem der Ansprüche 1 bis 6, wobei die Wechselstromladung eine Steuereinheit beinhaltet, welche die Formungsbetriebe steuert.

8. Spritzgussmaschine nach Anspruch 1 bis 7, wobei
die Wechselstromquelle (100) derart angepasst ist, elektrischen Wechselstrom zu liefern;
der Regenerierungsteil (80) eine Eingabe und eine Ausgabe aufweist, wobei die Eingabe mit der Wechselstromquelle (100) verbunden ist;
die Wechselstromladung (110, 26) mit der Stromquelle (100) und dem Stromregenerierungsteil (80) verbunden ist;
die Wechselstromladung (110, 26) die Steuerung (26) beinhaltet; und weiter umfassend
einen elektrischen Stromspeicherungsteil (70), der den elektrischen Betriebsgleichstrom für den Betrieb der Wechselstromladung (110, 26) über den Stromregenerierungsteil (80) speichert und der mit der Ausgabe des Stromregenerierungsteils (80) verbunden ist;
Antriebsschaltungen (51-54), die Eingaben aufweisen, die mit der Ausgabe des Stromregenerierungsteils (80) verbunden sind;
Servomotoren (11, 32, 42, 44), die mit Ausgaben der Antriebsschaltungen (51-54) verbunden sind;
den Stromregenerierungsteil (80), der Wechselstrom von der Eingabe in Gleichstrom an der Ausgabe umwandelt, und Gleichstrom von der Ausgabe in Wechselstrom an der Eingabe umwandelt; und
wobei der elektrische Stromspeicherungsteil (70) derart angepasst ist, mit der durch die Servomotoren (11, 24, 42, 44) erzeugten regenerativen Gleichstromenergie über die Antriebsschaltungen (51-54) geladen zu werden, um entladene Energie an die Servomotoren (51-54) über die Antriebsschaltungen (51-54) zu liefern, und um entladene Energie an die Wechselstromladung (110, 26) über den Stromregenerierungsteil (80) zu liefern; und
wobei der Stromregenerierungsteil (80) von dem elektrischen Stromspeicherungsteil (70) den elektrischen Betriebsstrom zum Betrieb der Ladung (110) liefert, wenn die Steuerung (26) den Stromausfall der Wechselstromquelle (100) erkennt.

## Revendications

1. Machine de moulage par injection (1), comprenant :
a) une partie de régénération de courant (80) qui régénère du courant électrique vers une source de courant alternatif (100) ; et
b) une charge de courant alternatif (110, 126), qui est connectée entre la source de courant alternatif (100) et la partie de régénération de courant (80) ; et
c) un dispositif de commande (26) qui est adapté à détecter une panne de courant de la source de courant alternatif (100) ; dans lequel
d) la partie de régénération de courant (80) qui est adaptée à délivrer du courant électrique de fonctionnement destiné à faire fonctionner la charge de courant alternatif (110, 26) lorsque ladite panne de courant de la source de courant alternatif (100) se produit et lorsque ledit dispositif de commande (26) détecte ladite panne de courant de la source de courant alternatif (100).

2. Machine de moulage par injection selon la revendication 1, comprenant en outre :
une partie d'accumulation de courant électrique (70) qui accumule le courant électrique de fonctionnement.

3. Machine de moulage par injection selon l'une quelconque des revendications 1 à 2, comprenant en outre :
un moteur (11, 32, 42, 44) ; et
une partie d'entraînement (51-54) destinée à entraîner le moteur ; dans lequel
le courant électrique de fonctionnement comporte un courant régénératif qui est régénéré à partir du moteur par le biais de la partie d'entraînement.

4. Machine de moulage par injection selon l'une quelconque des revendications 1 à 3, comprenant en outre :
une partie de coupure (65) qui coupe une amenée du courant électrique de fonctionnement à la source de courant (100) .

5. Machine de moulage par injection selon la revendication 4, dans lequel
la partie de coupure (65) est configurée pour couper un trajet d'amenée de courant (120) entre la source de courant (100) et la charge (110).

6. Machine de moulage par injection selon la revendication 4 ou 5, comprenant en outre :
au moins deux des charges (111-113) ; dans lequel
la partie de coupure (65) est configurée pour couper un trajet d'amenée de courant entre les charges (111-113).

7. Machine de moulage par injection selon l'une quelconque des revendications 1 à 6, dans lequel la charge de courant alternatif comporte une unité de commande qui commande des opérations de moulage.

8. Machine de moulage par injection selon les revendications 1 à 7, dans lequel
ladite source de courant alternatif (100) est adaptée à délivrer du courant électrique alternatif ;
ladite partie de régénération (80) présente une entrée et une sortie, ladite entrée étant connectée à ladite source de courant alternatif (100) ;
ladite charge de courant alternatif (110, 26) est connectée à la source de courant (100) et à la partie de régénération de courant (80) ;
ladite charge de courant alternatif (110, 26) comporte ledit dispositif de commande (26) ; et comprenant en outre
une partie d'accumulation de courant électrique (70) qui accumule le courant électrique continu de fonctionnement destiné à faire fonctionner la charge de courant alternatif (110, 26) par le biais de la partie de régénération de courant (80) et qui est connectée à la sortie de la partie de régénération de courant (80) ;
des circuits d'entraînement (51-54) présentant des entrées connectées à ladite sortie desdites parties de régénération de courant (80) ;
des servomoteurs (11, 32, 42, 44) connectés aux sorties des circuits d'entraînement (51-54) ;
ladite partie de régénération de courant (80) convertissant le courant alternatif provenant de l'entrée en courant continu à la sortie et convertissant le courant continu provenant de la sortie en courant alternatif à l'entrée ; et
dans lequel ladite partie d'accumulation de courant électrique (70) est adaptée à être chargée en énergie de courant continu régénératif générée par les servomoteurs (11, 24, 42, 44) par le biais des circuits d'entraînement (51-54), pour délivrer l'énergie déchargée aux servomoteurs (51-54) par le biais des circuits d'entraînement (51-54), et pour délivrer l'énergie déchargée à la charge de courant alternatif (110, 26) par le biais de ladite partie de régénération de courant (80) ; et
dans lequel la partie de régénération de courant (80) délivre à partir de ladite partie d'accumulation de courant électrique (70) ledit courant électrique de fonctionnement destiné à faire fonctionner la charge (110) lorsque ledit dispositif de commande (26) détecte ladite panne de courant de la source de courant alternatif (100).
